# EUROPEAN PATENT SPECIFICATION

(11) **EP 0 979 352 B1**
(45) Date of publication and mention of the grant of the patent: **30.10.2002**
(21) Application number: 98907895.1
(22) Date of filing: 09.03.1998
(51) Int. Cl.: F02F 3/00, F02F 3/24, F02F 5/00, F16J 1/09, F16J 9/00

(54) **A TWO-STROKE DIESEL ENGINE PISTON**
KOLBEN FüR EINEN ZWEITAKT-DIESELMOTOR
PISTON POUR MOTEUR A DEUX TEMPS DU TYPE DIESEL

(30) Priority: 14.03.1997 DK 28697
(43) Date of publication of application: 16.02.2000
(73) Proprietor: MAN B & W Diesel A/S, 2450 Copenhagen SV (DK)
(72) Inventor: MOCZULSKI, Lech, DK-2650 Hvidovre (DK)
(74) Representative: Indahl, Peter Jensen
(86) International application number: DK9800087
(87) International publication number: WO98041749

(56) References cited:
- WO-A-97/11295
- DE-A- 19 514 918
- GB-A- 2 104 621
- PATENT ABSTRACTS OF JAPAN, Vol. 8, No. 5, (M-267); & JP,A,58 167 850 (MITSUBISHI JUKOGYO K.K.) 4 October 1983.
- PATENT ABSTRACTS OF JAPAN, Vol. 12, No. 126, (M-687); & JP,A,62 251 456 (MAZDA MOTOR CORP) 2 November 1987.

## Description

The present invention relates to a two-stroke crosshead diesel engine piston having a number of ring grooves holding piston rings which have a smaller ring height in the axial direction of the piston than the height of the ring groove associated with the ring, the piston at at least some of the rings having pressure relief passages forming gas flow connections from above to below the piston ring, which pressure relief passages are at least partially formed in the piston, wherein the outlet openings of the pressure relief passages for hot gas flowing from above to below the piston ring have a location and orientation so that at extension through the outlet openings the axes of the passages avoid hitting a piston ring.

GB-A 2 104 621 and Japanese patent publication No. 2-48737 describe pistons with ring grooves for piston rings in which gas flow passages have been made in the piston material between the ring grooves in the form of rectilinear bores starting behind the ring innermost in the ring groove and extending downwards and obliquely outwards so that the bores open out approximately in the middle of the upper surface of the underlying ring groove. This means that the piston rings in the underlying ring grooves are exposed to unfortunate heat influences from the leakage gas with a consequent risk of damage to the material of the piston ring and of loss of the ring stresses that keep the outer ring surface in contact with the inner surface of the liner.

DE-A 195 14 918 describes a piston of the above mentioned kind for a four-stroke trunk piston engine. This known invention aims at reducing the problem that lubricating oil from the crank housing is collected in the ring groove while the piston ring abuts the upper surface of the ring groove, whereupon the lubricating oil is delivered to the combustion chamber at the subsequent shift of the position of the ring to contact with the lower surface of the ring groove. The ring grooves are interconnected through a connecting conduit having one axial section and two radial sections. According to the description in the German publication, during the suction stroke the connecting conduit causes the piston ring to move earlier from contact with the upper surface of the ring groove to contact with the lower surface of the ring groove, which interrupts the flow of lubricating oil into the ring groove so that the sealing action against transport of lubricating oil up into the combustion chamber is improved. In a crosshead engine the said problem with transport of lubricating oil is not relevant, and furthermore a two-stroke engine has no suction stroke. Moreover it is difficult to manufacture the axial section of the connecting conduit.

Various examples of piston rings are known, formed with recesses causing gas leakage past the piston ring to reduce the pressure drop across the ring and thus the ring wear; WO94/12815, for example, describes leakage tracks formed as grooves in the contact surface of the ring against the cylinder wall, i.e., the tracks extend from the upper surface to the lower surface of the ring.

The object of the present invention is to provide a piston that permits controlled flow of limited amounts of leakage gas past at least one piston ring to reduce ring wear, and at the same time protects the piston rings from excessive influences.

In view of this, the piston according to the invention is characterized in that the piston is a two-stroke crosshead diesel engine piston, and that the total cross-sectional area Aₜₒₜ of these pressure relief passages associated with the individual piston ring is in the interval from D²/68000 to D²/10000, D being the piston diameter expressed in mm, and Aₜₒₜ being the area expressed in mm².

When the hot leakage gas flows out from the pressure relief passages, it does so in the form of concentrated jets of hot gas that generate very concentrated point heatings of the material they hit, because at the hit points no heat protective boundary layer of any significant thickness can be maintained. The design according to the invention protects the highly loaded piston rings from the point heatings of the outlet jets so that the rings are better able to fulfil their primary function of preventing the high pressures in the combustion chamber from penetrating below the piston. This is especially an advantage in modern two-stroke crosshead engines that have very high cylinder outputs.

It is essential for the operation of the crosshead engine that the ring wear is controlled within limits that take into account both a suitable minimization of the fuel consumption and the contrary desire for a long life for the cylinder components.. If the area becomes smaller than D²/68000, the differential pressure across the piston ring will be disadvantageously high with an associated heavy ring wear. The upper area limit of D²/10000 indicates a suitable compromise between a substantial reduction of the ring wear and a not too heavy deterioration of the combustion conditions and thus the specific fuel consumption. The interval stated provides an advantageously long ring life combined with good operating conditions for the engine as a whole. The upper area limit also prevents the pressure below the piston rings from escaping so fast immediately after the opening of the exhaust valve that the piston rings do not move upwards in the ring grooves.

Compared with the known piston rings which are provided with leakage tracks in a side surface, it is possible with the piston according to the invention to use piston rings which are not mechanically weakened by leakage tracks machined wholly or partially into the outer surface of the ring. This is a considerable advantage because the level of stresses in the ring is high at the outer surface, and even minor areas with recesses may cause unfavourable stress concentrations in the material at the outer surface.

In one embodiment the openings of the pressure relief passages are located radially to the inside of the back surface of the piston ring, and the pressure relief passages extend in parallel with the axial direction of the piston. These pressure relief passages can be bored row-wise from the lower surface of the piston all the way up to the top ring groove in a single boring operation intersecting all ring grooves. If it is desired not to use a number of the bore sections, they can be plugged. Since the bored passages are located at the bottom of the ring groove behind the piston ring, the outlet jets of leakage gas are prevented from hitting directly into the piston ring. The embodiment provides an advantageously simple manufacture of the piston.

In an alternative embodiment, the openings of the pressure relief passages are located in the peripheral surface of the piston, whereby the outlet jets of leakage gas hit the inner surface of the cylinder liner. Since the piston moves in the liner, the outlet jets all the time act on new areas, which counteracts overheating. Contrary to the piston ring, the liner is also directly cooled by a coolant that removes the heat transmitted by the leakage gas.

If it is desired to keep the ring groove and the piston ring completely free of leakage tracks, each pressure relief passage may comprise at least two passage segments that extend inwards from the cylindrical outer surface of the piston and are in mutual flow communication inside the piston, preferably through the segments having a rectilinear converging course and meeting at a joint point of intersection.

Letting at least part of the pressure relief passages extend from a depression in the ring groove substantially in parallel with the upper or lower surface of the ring groove and open out at the peripheral surface of the piston renders it easier to manufacture the passages because the tool is advanced in the radial direction of the piston at the manufacturing.

In a preferred embodiment, the pressure relief passages extend in a piston portion which is removably inserted in a recess at the ring groove. There may be a removable piston portion at each ring groove. The piston portion may be formed from a number of part portions assembled at the mounting in the ring groove into a whole piston portion. The separate piston portion is substantially smaller than the whole piston and is therefore easier to handle at the manufacture of the pressure relief passages. Moreover, the piston portion can be replaced independently of the other portions of the piston, which is advantageous because the material around the pressure relief passages may have a tendency towards eroding away.

Preferably, the lower surface of the ring groove is provided with a coating of a material, such as chromium, which is harder than the base material of the piston, the pressure relief passages are upwardly open passages in the lower surface of the ring groove, and the pressure relief passages have a greater height in the axial direction of the piston than the thickness of the harder material coating. The pressure from the leakage gas in the upwardly open passages influences the lower surface of the piston ring with an upward force that contributes to a rapid lifting off of the piston ring from the lower surface of the ring groove, when the piston is at the end of the working stroke. This lifting-off with accompanying upward and downward movement of the piston ring in the ring groove is substantial to keep the ring groove free of coke formations. It is also an advantage that the passages are deeper than the thickness of the harder material, as this may be more sensitive to heat than the underlying base material. When the passage is allowed to go all the way through the harder material, only a very small part of the harder material will be exposed to the heat influence from the leakage gases.

It is possible to let the pressure relief passages comprise several passage sections passing through the piston ring from its upper surface to its lower surface, the passage sections in the lower surface of the piston ring opening out into at least one upwardly open annular passage section which is formed in the lower surface of the ring groove and which has radially outwardly extending passage sections to the peripheral surface of the piston below the piston ring. In this embodiment, a major part of the hot gases avoid passing through the cavity in the ring groove behind the piston ring, being passed down through the piston ring at a suitable distance from the front and back surfaces of the latter to the upwardly open passage section from where the gases flow outwards below the piston ring. The annular, upwardly open passage section distributes the action of the gas forces on the lower surface of the piston ring so that the ring is advantageously evenly influenced.

For each piston ring there may suitably be at least four, preferably from seven to sixteen active pressure relief passages substantially evenly distributed along the periphery of the piston. The greater the number of passages, the more uniformly the heat load is distributed on the material around the pressure relief passages. Apart from the heat distribution, other circumstances may also be taken into account when the most suitable number of passages is determined, such as the risk of coke depositions in the ring groove. The leakage gas will flow down past several of the piston rings on the piston, and if the pressure relief passages are mutually displaced in the circumferential direction between the different ring grooves, the gas has to flow in the circumferential direction of the piston to flow from the leakage tracks at a ring groove to the leakage tracks in the underlying piston ring. The gas may draw oil remnants and residues from the combustion with it, and the risk of deposition of residual material that may coke becomes greater, the longer the flow path of the gas is. In consideration of counteracting coke depositions in the annular space behind the piston ring, the piston ring preferably has from eight to sixteen leakage tracks in its lower surface.

Examples of embodiments of the invention will now be explained in further detail below with reference to the schematic drawings, in which
Fig. 1 is a side view of a piston with ring grooves for piston rings,
Figs. 2a and 2b are longitudinally sectional and cross-sectional outlines of a first embodiment of pressure relief passages at ring grooves in a piston,

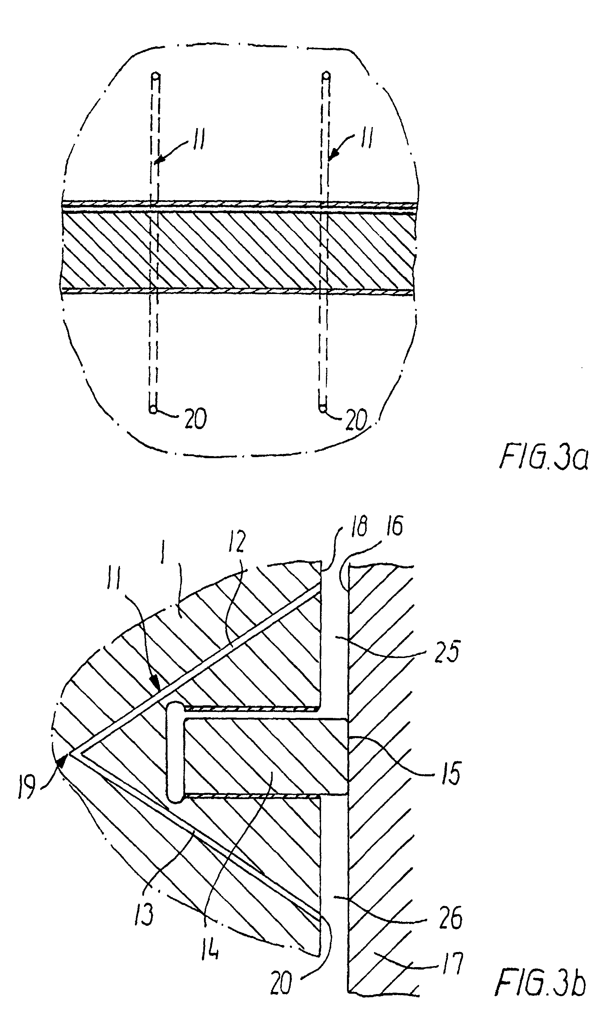

Figs. 3a and 3b are a side view of and a vertically sectional view, respectively, through a ring groove with a second embodiment of pressure relief passages,
Fig. 4a is a cross-sectional view of a third embodiment,
Figs. 4b and 4c are side views of two variants of the third embodiment,
Figs. 5a and 5b are cross-sectional and side views of a ring groove with a fourth embodiment of pressure relief passages, Fig. 5b being shown in a greater scale,
Fig. 6a is a cross-sectional view of a fifth embodiment,
Figs. 6b, 6c, 6d and 6e are side views of different variants of the fifth embodiment, and
Figs. 7a and 7b are a cross-sectional and a side view, respectively, of a ring groove with a sixth embodiment of pressure relief passages.

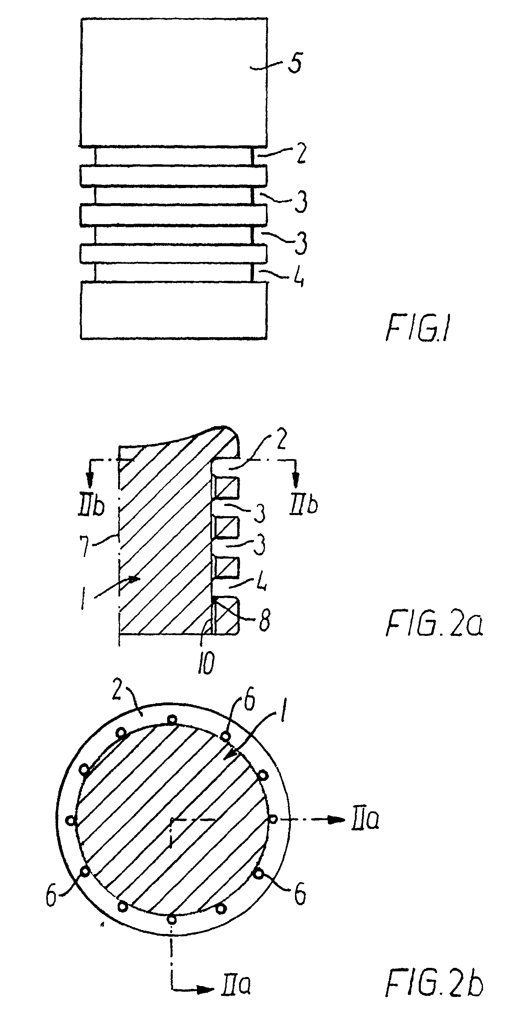

Fig. 1 shows a piston 1 for a large two-stroke crosshead engine of the diesel type. By means of a piston rod and a crosshead as well as a connecting rod, not shown, the piston is connected with the crankshaft. Depending on the engine size, the piston may, for example, have a diameter in the interval from 240 to 1000 mm. The piston has a number of axially separated ring grooves 2-4, in which piston rings can be mounted. Typically, four piston rings are mounted on the piston, but of course other numbers may be used, such as from two to eight piston rings.

In the following description, the reference numerals used in the different embodiments are the same for the same sort of elements.

The piston shown in Fig. 1 has a relatively elongated piston portion, a so-called high top land 5, located above the ring groove for the top piston ring. This provides a certain protection of the top piston ring because the hot combustion gases first have to pass through an annular space between the inner surface of the cylinder and the high top land before they reach the piston ring. The high top land 5 may, for example, have an axial extent so that the top piston ring is located more than five times, preferably more than ten times the height of the piston ring below the uppermost point on the piston. The piston may also be formed as shown in Fig. 2, where the ring groove 2 for the top piston ring is close to the uppermost point of the piston.

A rather large number of pressure relief passages 6 are located at the bottom of the ring groove 2 and connect it with the underlying ring groove 3. Correspondingly, the ring groove 3 is connected with its underlying ring groove, and so forth down to the bottom ring groove 4. The pressure relief passages 6 may be bored in parallel with the centre axis 7 of the piston at a radius locating the passages at the bottom of the ring grooves, whereby the passages open out radially on the inside of the back surface of the piston ring, not shown, so that the outflowing leakage gas does not hit the piston ring directly. The bore sections 10 located below the bottom ring groove 4 are cut off by plugging 8, packing, closure by welding or in any other way that prevents gas from flowing through the sections 10 down below the piston. If it is desired that the gas should flow in the circumferential direction of the ring groove before it flows down to the underlying ring groove, more bores can be bored than the number of relief passages, and then some of the bores are closed off at one ring groove, and others of the bores at another ring groove.

In a second embodiment, pressure relief passages 11 are each manufactured as two passage segments 12, 13 located completely free of the associated ring groove (2 or 3), in which a piston ring 14 is mounted. The stresses in the piston ring 14 keep its outer ring surface 15 in contact with an inner surface 16 of a cylinder wall or a cylinder liner 17. The passage segment 12 has been bored obliquely downwards into the piston from the cylindrical outer surface 18 of the piston in the area above the ring groove, and the passage segment 13 has been bored obliquely upwards into the piston from the outer surface 18 in the area below the ring groove so that the segments 12, 13 have converging courses and intersect each other in a joint point of intersection 19 which may suitably be located radially on the inside of the ring groove.

The embodiment can be modified by containing several passage segments for each passage. The piston 1 may, for example, be formed with an internal annular cavity located on the inside of the ring groove, and this annular cavity may constitute a segment in each passage so that the segments are simply bored from the outer surface of the piston into the internal annular cavity. Firstly, this means that the bores can be performed with less precision, because they do not need to hit the joint point of intersection, and secondly, leakage gas may be distributed between several passages via the annular cavity. Should such distribution be undesirable, the internal cavity may be divided in between each of the pressure relief passages.

During the combustion in the combustion chamber above the piston, hot leakage gas flows into the segment 12 above the piston ring and out through the opening 20 of the segment 13 below the piston ring.

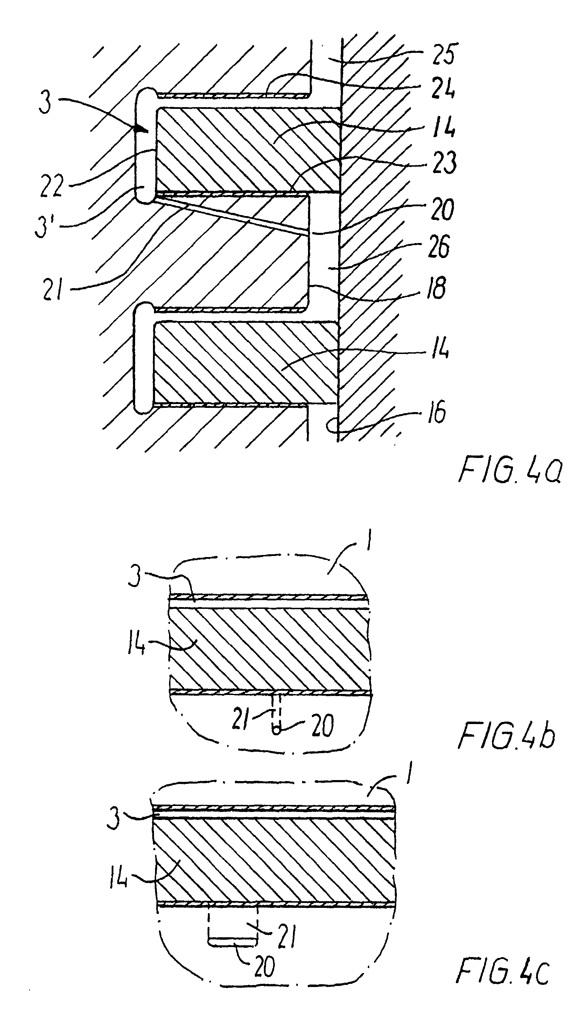

The third embodiment is seen in Fig. 4a in connection with the second ring groove 3 from the bottom, where pressure relief passages 21 extend from the bottom of the annular space 3' behind the back surface 22 of the piston ring and obliquely downwards out to the outer surface 18 of the piston below the piston ring 14. During the working stroke the piston ring 14 is pressed down into sealing contact with the lower surface 23 of the ring groove. Since the piston ring has a smaller ring height than the height of the ring groove there is a considerable clearance between the upper surface of the piston ring and the upper surface 24 of the ring groove, and this clearance causes the annular space 3' behind the piston ring to be under largely the same pressure as the annular space 25 above the piston ring, at the outer surface of the piston.

The hot leakage gas flows from the annular space 3' through the passages 21 and out through the openings 20, wherefrom the gas jets pass across the annular space 26 below the piston ring and hit the inner surface 16 of the cylinder liner, and at the same time the pressure in the annular space 26 is being built up owing to the inflow of leakage gas. The outlet openings 20 are located on the outer surface of the piston and are therefore continuously moved in relation to the inner surface 16 so that the latter is not subjected to heat damage. It is clear that the annular space 3' is supplied with hot gas corresponding to the outflowing amount of leakage gas, but the supply takes place through the clearance between the upper ring surface and the upper surface 24, where the flow area is many times larger than the cross-sectional area of the passages 21, and the gas flows are correspondingly slower and calmer.

The passages 21 may have different cross-sectional shapes, for example a simple circular cross-section as shown in Fig. 4b or an elongated cross-section as shown in Fig. 4c. The elongated cross-section has a larger area per passage, which results in fewer passages per ring groove for a specific total leakage area. It is possible to use passages with several different cross-sectional shapes in connection with the same ring groove.

In the fourth embodiment, the pressure relief passages 30 extend in parallel with the lower surface 23 of the ring groove from the bottom of the annular space 3' behind the piston ring and radially outwards to the opening 20 in the outer surface 18. The lower and upper surfaces of the ring groove are provided with a coating 31 of a hard material, such as chromium. The pressure relief passages 30 are upwardly open passages and have a larger passage depth d than the thickness t of the coating 31. This provides the advantage that the coating is only to a slight degree affected by the hot leakage gases. Naturally, the passages 30 can be formed with different cross-sectional areas as described in connection with the passages 21.

In a fifth embodiment, pressure relief passages 32 are provided in a separate piston portion 33 constituting the lower delimitation of the ring groove for the piston ring 14. The piston portion has a flange portion 34 placed in engagement with a recess at the bottom of the ring groove, whereby the piston portion is fastened to the remaining part of the piston. The piston portion 33 may be made of cast steel capable of enduring a long-term influence of substantially higher temperatures, normally at least 450°C, than the usual piston material, cast iron, which is more sensitive to temperatures. Moreover there is the substantial advantage of forming the pressure relief passages in a separate and replaceable piston portion 33 that different piston portions may be mounted on the same piston base according to the actual power output chosen for the engine in which the piston is to be mounted. For example, the most suitable leakage area at a ring groove depends on, *inter alia,* the maximum pressure of the specific engine, and through a suitable choice of piston portion, the piston base can be adapted to the actual operating parameters of the engine.

It is a common feature for the various embodiments described herein that the total cross-sectional area Aₜₒₜ of the pressure relief passages associated with the individual piston ring is in the interval from D²/68000 to D²/10000, and preferably in the interval from D²/30000 to D²/20000. For a typical two-stroke crosshead engine the piston diameter D is about 600 mm, and Aₜₒₜ is in the interval from 5.29 to 36 mm², preferably in the interval from 12 to 18 mm². For the very large engines having a piston diameter D of about 1000 mm the area Aₜₒₜ is in the interval from 14.7 to 100 mm², preferably in the interval from 33.3 to 50 mm².

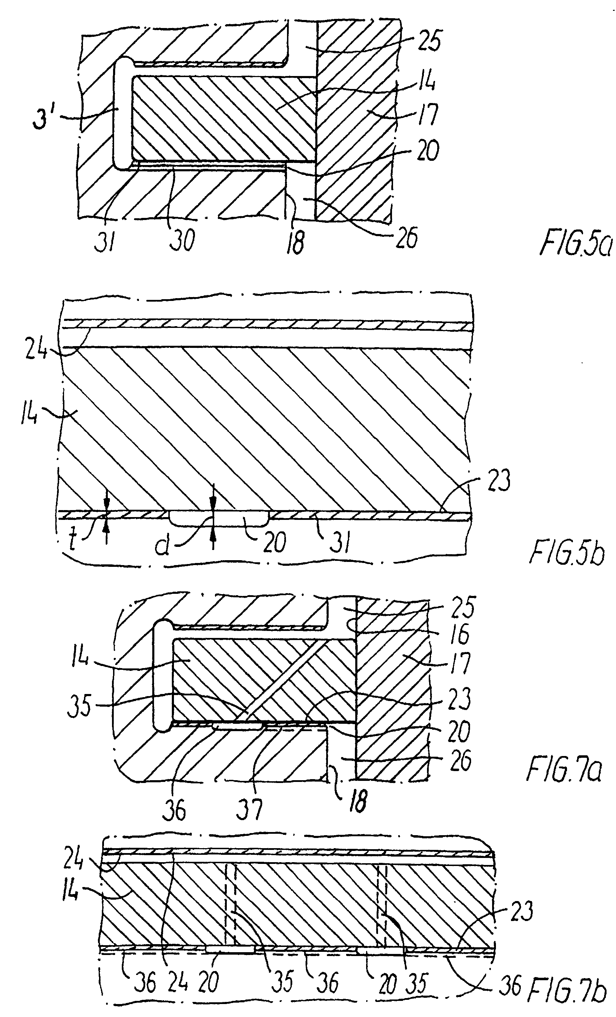

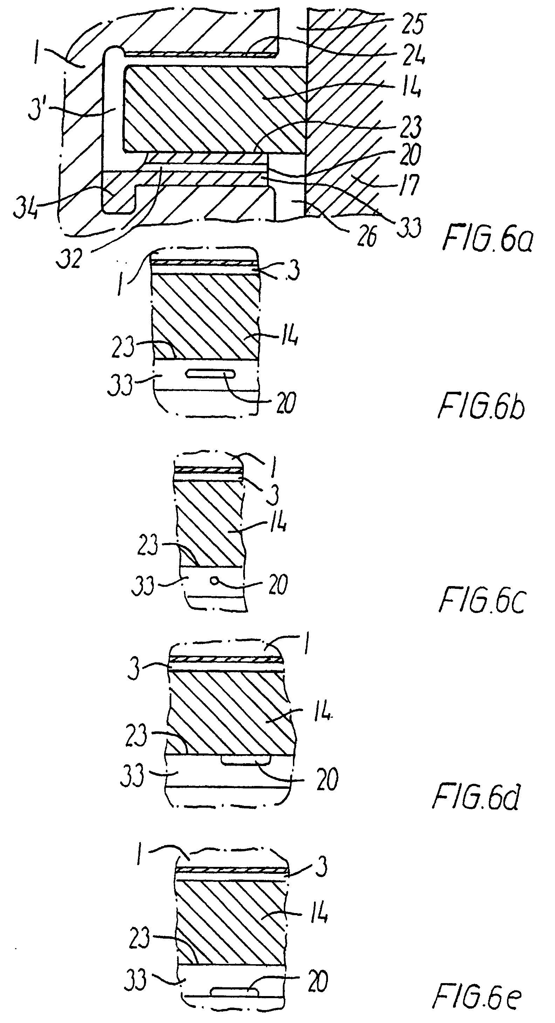

It is seen from Figs. 6b and 6c that the pressure relief passages 32 may have different cross-sectional shapes and sizes, and Fig. 6d shows a location of the passage at the top of the piston portion 33 corresponding to the embodiment shown in Fig. 5b. Moreover, as shown in Fig. 6e the passages 32 may be located at the lower surface of the piston portion 33, but this is not a preferred embodiment.

In the sixth embodiment shown in Figs. 7a, b, the pressure relief passages comprise passage sections 35 which pass through the piston ring 14, preferably obliquely downwards, from the annular space 25 to an annular passage section 36 which is formed as an upwardly open recess in the upper surface 23 of the ring groove. From the passage section 36, the leakage gas flows via radially extending passage sections 37 to the outlet openings 20, from where the gas hits the inner surface 16 of the liner, slows down and causes a pressure increase in the annular space 26.

## Claims

1. A diesel engine piston (1) having a number of ring grooves (2-4) holding piston rings (14) which have a smaller ring height in the axial direction of the piston than the height of the ring groove associated with the ring, the piston at at least some of the rings having pressure relief passages (6, 11, 21, 30, 32, 35-37) forming gas flow connections from above to below the piston ring, which pressure relief passages are at least partially formed in the piston, wherein the outlet openings (20) of the pressure relief passages (6, 11, 21, 30, 32, 35-37) for hot gas flowing from above to below the piston ring (14) have a location and orientation so that at extension through the outlet openings (20) the axes of the passages avoid hitting a piston ring (14), **characterized in that** the piston is a two-stroke crosshead diesel engine piston, and that the total cross-sectional area Aₜₒₜ of these pressure relief passages associated with the individual piston ring is in the interval from D²/68000 to D²/10000, D being the piston diameter expressed in mm, and Aₜₒₜ being the area expressed in mm².

2. A piston according to claim 1, **characterized in that** the openings (20) of the pressure relief passages (6) are located radially to the inside of the back surface of the piston ring (14), and that the pressure relief passages (6) extend in parallel with the axial direction of the piston.

3. A piston according to claim 1, **characterized in that** the openings (20) of the pressure relief passages (11, 21, 30, 32, 37) are located in the peripheral surface (18) of the piston.

4. A piston according to claim 3, **characterized in that** each pressure relief passage (11) comprises at least two passage segments (12, 13) that extend inwards from the cylindrical outer surface (18) of the piston and are in mutual flow communication inside the piston (1), preferably through the segments having a rectilinear converging course and meeting at a joint point of intersection (19).

5. A piston according to claim 1, **characterized in that** at least part of the pressure relief passages (30, 32, 36-37) extends from a depression in the ring groove substantially in parallel with the upper or lower surface (23) of the ring groove and open out at the peripheral surface of the piston.

6. A piston according to claim 5, **characterized in that** the pressure relief passages (32) extend in a piston portion (33) which is removably inserted in a recess at the ring groove (2, 3).

7. A piston according to claim 5, **characterized in that** the lower surface (23) of the ring groove is provided with a coating (31) of a material, such as chromium, which is harder than the base material of the piston (1), that the pressure relief passages are upwardly open passages (30, 37) in the lower surface of the ring groove, and that the pressure relief passages have a greater height in the axial direction of the piston than the thickness of the harder material coating.

8. A piston according to any one of claims 1-7, **characterized in that** the pressure relief passages comprise passage sections (35) passing through the piston ring (14) from its upper surface to its lower surface, that the passage sections in the piston ring open out into at least one upwardly open annular passage section (36) which is formed in the lower surface of the ring groove and which has radially outwardly extending passage sections (37) to the peripheral surface (18) of the piston below the piston ring.

9. A piston according to any one of claims 1-8, **characterized in that** for the individual piston ring (14) at least four, preferably from seven to sixteen, active pressure relief passages (6, 11, 21, 30, 32, 35-37) are substantially evenly distributed along the periphery of the piston.

10. A piston according to any one of claims 1-9, **characterized in that** the total cross-sectional area Aₜₒₜ of said pressure relief passages associated with the individual piston ring is in the interval from D²/30000 to D²/20000.

## Patentansprüche

1. Kolben (1) für einen Dieselmotor mit einer Anzahl von Ringnuten (2-4), welche Kolbenringe (14) halten, welche eine kleinere Ringhöhe in der Axialrichtung des Kolbens haben als die Höhe der dem Ring zugeordneten Ringnut, wobei der Kolben an mindestens einigen der Ringe Druckbegrenzungsdurchgänge (6, 11, 21, 30, 32, 35-37) hat, welche Gasströmungsverbindungen von oberhalb des Kolbenringes bis unter den Kolbenring bilden, wobei die Druckbegrenzungsdurchgänge mindestens teilweise im Kolben gebildet sind und die Auslassöffnungen (20) der Druckbegrenzungsdurchgänge (6, 11, 21, 30, 32, 35-37) für heißes Gas, welches von oberhalb nach unterhalb des Kolbenringes (14) strömt, so eine Lage und Ausrichtung haben, dass bei der Ausdehnung durch die Auslassöffnungen (20) die Achsen der Durchgänge ein Auftreffen auf einen Kolbenring (14) vermeiden,
**dadurch gekennzeichnet,**
**dass** der Kolben ein Kolben für einen Zweitakt-Kreuzkopf-Dieselmotor ist, und dass die gesamte Querschnittsfläche Aₜₒₜ dieser Druckbegrenzungsdurchgänge, welche dem einzelnen Kolbenring zugeordnet sind, im Intervall von D²/68000 bis D²/10000 liegt, wobei D der Kolbendurchmesser in mm und Aₜₒₜ die Fläche in mm² ausgedrückt ist.

2. Kolben nach Anspruch 1, **dadurch gekennzeichnet, dass** die Öffnungen (20) der Druckbegrenzungsdurchgänge (6) radial zur Innenseite der Rückseite des Kolbenrings (14) angeordnet sind, und dass die Druckbegrenzungsdurchgänge (6) sich parallel zur Axialrichtung des Kolbens erstrecken.

3. Kolben nach Anspruch 1, **dadurch gekennzeichnet, dass** die Öffnungen (20) der Druckbegrenzungsdurchgänge (11, 21, 30, 32, 37) in der Umfangsfläche (18) des Kolbens angeordnet sind.

4. Kolben nach Anspruch 3, **dadurch gekennzeichnet, dass** jeder Druckbegrenzungsdurchgang (11) mindestens zwei Durchgangssegmente (12, 13) enthält, welche sich von der zylindrischen äußeren Fläche (18) des Kolbens nach innen erstrecken und in gegenseitiger Strömungsverbindung innerhalb des Kolbens (1) sind, vorzugsweise durch die Segmente, welche einen geradlinigen konvergierenden Verlauf haben und sich an einem gemeinsamen Schnittpunkt (19) treffen.

5. Kolben nach Anspruch 1, **dadurch gekennzeichnet, dass** mindestens ein Teil der Druckbegrenzungsdurchgänge (30, 32, 36-37) sich von einer Vertiefung in der Ringnut im wesentlichen parallel zur oberen oder unteren Fläche (23) der Ringnut erstreckt und sich an der Umfangsfläche des Kolbens öffnet.

6. Kolben nach Anspruch 5, **dadurch gekennzeichnet, dass** die Druckbegrenzungsdurchgänge (32) sich in einem Kolbenabschnitt (33) erstrecken, welcher auswechselbar in eine Ausnehmung an der Ringnut (2, 3) eingesetzt ist.

7. Kolben nach Anspruch 5, **dadurch gekennzeichnet, dass** die untere Oberfläche (23) der Ringnut mit einer Beschichtung (31) eines Materials, wie Chrom, versehen ist, welches härter ist als das Basismaterial des Kolbens (1), dass die Druckbegrenzungsdurchgänge nach oben offene Durchgänge (30, 37) in der unteren Fläche der Ringnut sind, und dass die Druckbegrenzungsdurchgänge eine größere Höhe in Axialrichtung des Kolbens haben als die Dicke der härteren Materialbeschichtung.

8. Kolben nach einem der Ansprüche 1-7, **dadurch gekennzeichnet, dass** die Druckbegrenzungsdurchgänge Durchgangsabschnitte (35) enthalten, welche durch den Kolbenring (14) von seiner Oberfläche zu seiner unteren Fläche verlaufen, dass die Durchgangsabschnitte im Kolbenring sich in mindestens einen nach oben offenen ringförmigen Durchgangsabschnitt (36) öffnen, welcher in der unteren Oberfläche der Ringnut gebildet ist und welcher radial sich nach außen zur Umfangsfläche (18) des Kolbens unter dem Kolbenring erstreckende Durchgangsabschnitte (37) aufweist.

9. Kolben nach einem der Ansprüche 1-8, **dadurch gekennzeichnet, dass** bei dem einzelnen Kolbenring (14) mindestens vier, vorzugsweise sieben bis sechzehn, aktive Druckbegrenzungsdurchgänge (6, 11, 21, 30, 32, 35-37) im wesentlichen gleichmäßig um den Umfang des Kolbens verteilt sind.

10. Kolben nach einem der Ansprüche 1-9, **dadurch gekennzeichnet, dass** die Gesamtquerschnittsfläche Aₜₒₜ der Druckbegrenzungsdurchgänge, welche dem einzelnen Kolbenring zugeordnet sind, im Intervall von D²/30000 bis D²/20000 liegt.

## Revendications

1. Piston (1) de moteur diesel ayant un certain nombre de gorges annulaires (2-4) maintenant des bagues de piston (14) qui, dans la direction axiale du piston, ont une hauteur de bague inférieure à la hauteur de la gorge annulaire correspondant à la bague, le piston, dans au moins certaines des bagues, comportant des passages de décompression (6, 11, 21, 30, 32, 35-37) formant des connexions d'écoulement de gaz du dessus au dessous de la bague de piston, lesquels passages de décompression sont au moins partiellement formés dans le piston, dans lequel les ouvertures (20) de sortie des passages de décompression (6, 11, 21, 30, 32, 35-37) pour gaz chaud passant du dessus au dessous de la bague de piston (14) sont placées et orientées de façon que dans leur prolongement par les ouvertures (20) de sortie, les axes des passages évitent de heurter une bague de piston (14), **caractérisé en ce que** le piston est un piston de moteur diesel à crosse à deux temps, et **en ce que** la section transversale totale Aₜₒₜ de ces passages de décompression associés avec la bague de piston individuelle est comprise entre D²/68 000 et D²/10 000, D étant le diamètre du piston exprimé en mm, et Aₜₒₜ étant la section exprimée en mm².

2. Piston selon la revendication 1, **caractérisé en ce que** les ouvertures (20) des passages de décompression (6) sont situées radialement vers l'intérieur de la surface arrière de la bague de piston (14), et **en ce que** les passages de décompression (6) s'étendent parallèlement à la direction axiale du piston.

3. Piston selon la revendication 1, **caractérisé en ce que** les ouvertures (20) des passages de décompression (11, 21, 30, 32, 37) sont situées dans la surface périphérique (18) du piston.

4. Piston selon la revendication 3, **caractérisé en ce que** chaque passage de décompression (11) comporte au moins deux segments de passage (12, 13) qui s'étendent vers l'intérieur à partir de la surface extérieure cylindrique (18) du piston et sont en communication d'écoulement l'une avec l'autre à l'intérieur du piston (1), de préférence au travers des segments ayant une trajectoire rectiligne convergente et se rencontrant en un point d'assemblage d'intersection (19).

5. Piston selon la revendication 1, **caractérisé en ce qu'**au moins une partie des passages de décompression (30, 32, 36-37) s'étend à partir d'un creux dans la gorge annulaire, sensiblement parallèlement à la surface supérieure ou inférieure (23) de la gorge annulaire et débouche sur la surface périphérique du piston.

6. Piston selon la revendication 5, **caractérisé en ce que** les passages de décompression (32) s'étendent dans une partie (33) du piston qui est insérée de manière amovible dans un évidement situé au niveau de la gorge annulaire (2, 3).

7. Piston selon la revendication 5, **caractérisé en ce que** la surface inférieure (23) de la gorge annulaire comporte un revêtement (31) d'un matériau, tel que le chrome, qui est plus dur que le matériau de base du piston (1), **en ce que** les passages de décompression sont des passages (30, 37) ouverts vers le haut dans la surface inférieure de la gorge annulaire, et **en ce que** les passages de décompression ont, dans la direction axiale du piston, une hauteur supérieure à l'épaisseur du revêtement de matériau plus dur.

8. Piston selon l'une quelconque des revendications 1 à 7, **caractérisé en ce que** les passages de décompression comportent des sections de passage (35) traversant la bague de piston (14) à partir de sa surface supérieure jusqu'à sa surface inférieure, **en ce que** les sections de passage dans la bague de piston débouchent dans au moins une section de passage (36) annulaire ouverte vers le haut, qui est formée dans la surface inférieure de la gorge annulaire et ayant des sections de passage (37) s'étendant radialement vers l'extérieur, jusqu'à la surface périphérique (13) du piston sous la bague de piston.

9. Piston selon l'une quelconque des revendications 1 à 8, **caractérisé en ce que**, pour la bague de piston (14) individuelle, au moins quatre, de préférence sept à seize passages de décompression actifs (6, 11, 21, 30, 32, 35-37) sont répartis de manière sensiblement régulière sur le pourtour du piston.

10. Piston selon l'une quelconque des revendications 1 à 9, **caractérisé en ce que** la section transversale totale Aₜₒₜ desdits passages de décompression associés avec la bague de piston individuelle est comprise entre D²/30 000 et D²/20 000.
